# EUROPEAN PATENT SPECIFICATION

(11) **EP 0 894 665 B1**
(45) Date of publication and mention of the grant of the patent: **01.10.2003**
(21) Application number: 98500184.1
(22) Date of filing: 30.07.1998
(51) Int. Cl.: B60Q 1/076

(54) **Electric correction device for headlight positioning**
Elektronische Korrigiervorrichtung der Neigung eines Scheinwerfers
Dispositif de correction électronique de la position d'un phare

(30) Priority: 30.07.1997 ES 9701687; 30.07.1997 ES 9701688
(43) Date of publication of application: 03.02.1999
(73) Proprietor: Auxiliar de Componentes Electricos, SA, 50171 La Puebla de Alfinden-Zaragoza (ES)
(72) Inventor: Alejandre Alejandre, Miguel Angel, 50002 Zaragoza (ES); Lorente Monton, Miguel Angel, 50013 Zaragoza (ES); Cebollada Andres, Alberto, 50011 Zaragoza (ES)
(74) Representative: Gollob, Ulrik, Dr.

(56) References cited:
- GB-A- 2 239 513
- PATENT ABSTRACTS OF JAPAN vol. 010, no. 270 (M-517), 13 September 1986 (1986-09-13) & JP 61 092942 A (KOITO MFG CO LTD), 10 May 1986 (1986-05-10)

## Description

The present descriptive specification refers, as the title indicates, to an electrical setting device for headlamp positioning, of the type used in vehicles in order to place correctly the headlamps vertical position.

At present, most vehicles are not provided with the electrical means required to be able to control, from the driving seat, the headlamps position, but said headlamps are controlled by means of a lever or with the headlamp setting screws.

Also certain electrical devices are known, having the purpose of correcting the headlamps position when actuating on an electrical control device. Such devices are disclosed in JP 61 092 942 A and GB-A-2 239 513, which comprises the features mentioned in the preamble of claim 1.

EP 0 733 536 B1 discloses an electric power steering device for assisting the steering operation of an automobile.

The headlamps not provided with an electrical setting device have the disadvantage of being frequently defocused for it is relatively complicated having to open the engine hood and adjust the setting screws.

With respect to the electrical devices known for the headlamps positioning, we have to state that in some cases they involve serious operation problems, due to the device complexity, while in other cases the problem is the device excessive volume what makes it very difficult to be installed on the headlamp.

It is therefore an object of the present invention to overcome the drawbacks of the electrical setting devices known in the prior art. Further, it is an object to provide an electrical setting device for headlamp positioning which is small and which provides a stand alone solution.

This object is solved by the features of claim 1. Advantageous embodiments are described in the dependent claims.

An electrical setting device for headlamp positioning has been developed, said electrical setting device comprising a motion control electronic card, an electrical micromotor, a planet gear and a headlamp parabole actuating stem, all housed in a proper case.

The electronic card receives the feeding signal, ground and the reference voltage which starts the device. Said electronic card compares the inlet reference signal with the feed back voltage proportional to the headlamp position, by means of a potentiometer directly connected to it. Depending on both voltages, the card logic establishes if the device has to operate and whether it should raise or lower the headlamp.

The electrical motor operates depending on the polarity supplied by the card, turning in the required direction.

Pressure and speed required to turn the headlamp parabole in order to set its position are provided by the planet reduction gear connected to the motor output shaft, and to the acting stem which is coupled to the headlamp parabole.

Optionally, the device could be placed inside a turning cylindrical case, which contains the electronic card that controls the electrical motor motion, so that said electrical motor, through the associated speed reduction gear, displaces the actuating stem. The displacement of said actuating stem is obtained by means of a rack and pinion system; the said actuating stem is provided in its lower end with twin leg rim which holds the potentiometer lever.

The present invention provides the essential advantage of having very reduced dimensions as compared with the known means, with a high reliability based on a very simple design.

It must also be emphasized its very low manufacturing cost as well as its easy assembly.

To better understand the object of present invention the enclosed drawings show a practical preferential embodiment of it, where:

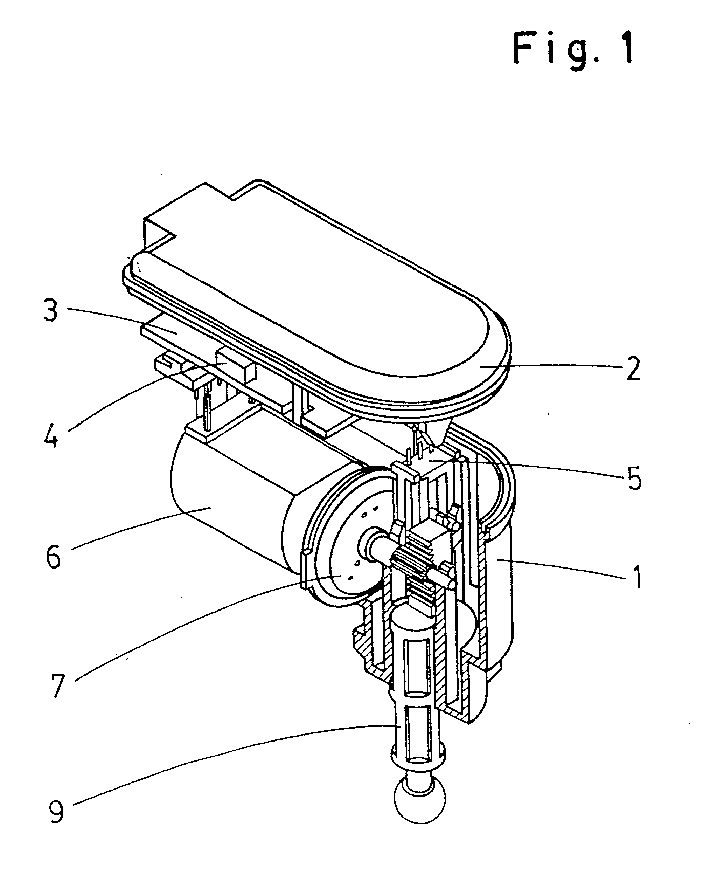

Figure 1 shows an enlarged perspective of the whole assembly, before mounting, with a cross section of the portion of the case housing the actuating stem.

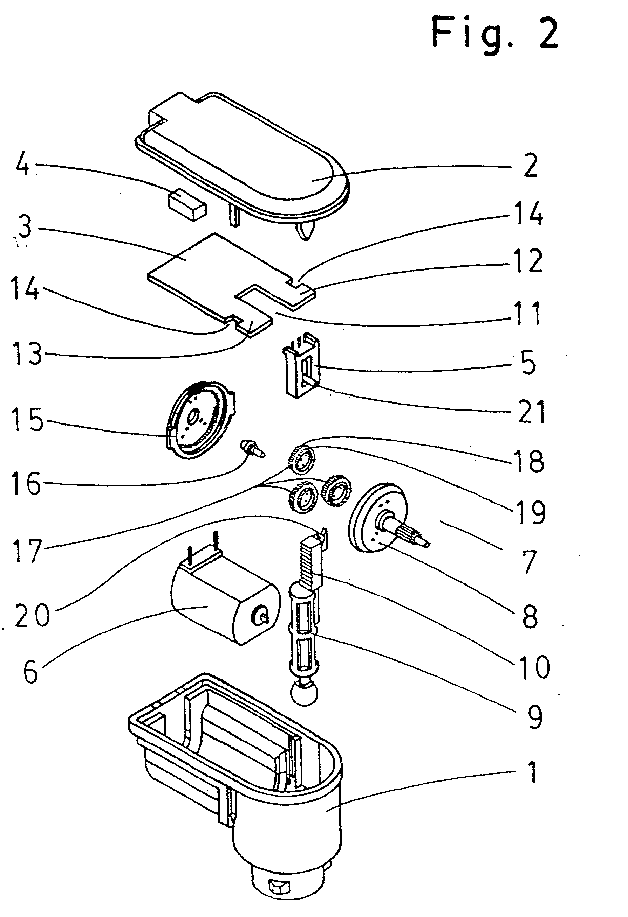

Figure 2 shows a perspective view of the assembly components.

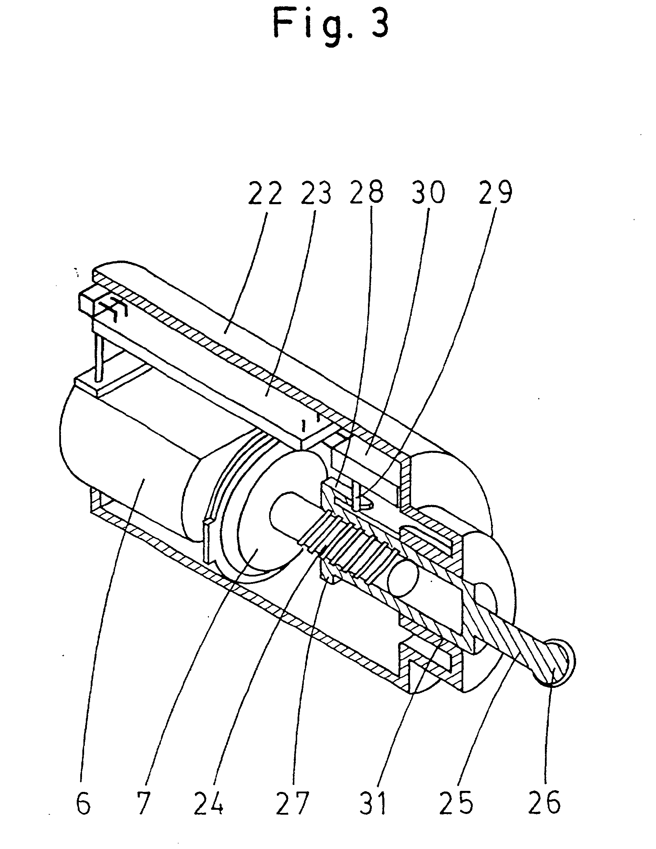

Figure 3 shows an enlarged perspective view of an optional pattern of the present invention, with cross sections of the case and the actuating stem for an improved view.

The electrical setting device for headlamp positioning includes, as it is seen in the reference figures, a case (1) with a cover (2) where the electronic card (3) is housed, said electronic card (3) comprising a control chip (4) and a potentiometer (5), all components included in the card being soldered to said card upper side.

Signals transmitted by the electronic card (3) to the motor (6) connected to the planet gear (7), make it possible to convert the motor turning motion into a linear displacement, by means of the crown (8) exterior shaft teeth, said crown being coupled to the actuating stem through the rack and pinion system (10).

The laminar section electronic card (3) has a square shape, having two square legs (12, 13) in one end (11), said legs having square notches (14), and the potentiometer (5) can be placed on either leg (12, 13).

The planet reduction gear (7) comprises a fixed crown (15) connected to the motor (6), which holds the radial turn crown (8); the inlet pinion (16) is centrally placed inside said assembly and has its outside end connected to the motor shaft (6), whereas its inside end is coupled, by means of a gear, to the satellite gears (17), having a double teeth (18, 19) with the largest diameter corresponding to the teeth (18) and smallest diameter corresponding to teeth (19), said satellite gears (17) transmitting the turning motion to the turning crown (8).

The actuating stem (9) is defined by a cylinder shape body with ribs and a rack (10) fastened to its upper end, the rack being displaced from the stem axis with the flat surface of said reck upper end (10) provided with a leg (20) which holds the potentiometer (5) control lever (21).

Optionally, the electrical setting device for headlampo positioning can be made up by a cylinder shape case (22), having a diametral notch on its front end, which houses the device comprising an electronic card (23) designed to control a motor (6) with a shaft coupled to a speed reduction gear (7) with the associated shaft (24) acting, by means of a worm screw system, on the actuating stem (25).

Said actuating stem (25) is defined by a cylinder body, with a hollow main portion and with a solid cylinder shape end portion of shorter diameter, having an spherical end (26) of slightly larger diameter, this end might be shaped as a ball joint or similar; the back end is provided with square profile (27), with a rim (28) split into two legs with a clip configuration, to hold the potentiometer (30) lever (29) and displace it accordingly; the said control lever (25) moves inside the neck (31) located in the case (22) front end.

Once the nature of present invention, as well as one way to realize it have been sufficiently described, it is only to be added that it will be possible to make changes in shape, materials and dimensions in the complete assembly or in their components, as long as those changes do not substantially alter the nature of the invention as claimed hereafter:

## Claims

1. Electrical setting device for headlamp positioning, of the type used to set the vertical position of vehicles headlamps from the driving seat comprising an electrical micro motor (6), a speed reduction gear (7), a headlamp parabole actuating stem (9; 25), and a potentiometer (5; 30), wherein the micro motor (6) output shaft is associated with a speed reduction gear (7) which by means of a rack (10) and a pinion system or by means of a worm screw displaces the actuating stem (9; 25), so that the motor turning motion is converted into a linear displacement of the actuating stem (9; 25),
**characterized in that**
the electrical setting device comprises a planet gear (7) as speed reduction gear having its input shaft on the same axis as the output shaft, wherein a motion control electronic card (3; 23) is housed together with the other components in the same casing (1; 25), and wherein the motion control electronic card (3; 23) comprises a potentiometer (5; 30) for providing a feed back voltage proportional to the headlamp position.

2. Electrical setting device for headlamp positioning according to claim 1,
**characterized in that**
the electrical device has a cylindrical exterior shape casing (22) containing the components such as the motor (6), gear (7) and electronic card (23).

3. Electrical setting device for headlamp positioning according to one of the precedent claims,
**characterized in that**
the electronic card (3) controlling system has a square shape with a square notch in one end, forming a twin leg (12, 13) arrangement, making it possible to place the potentiometer (5) in either leg, with all electronic components being soldered to the card upper face.

4. Electrical setting device for headlamp positioning according to one of the precedent claims,
**characterized in that**
the planet reduction gear comprises a fixed crown (15) fastened to the device case, which is associated to a free crown (8), so that the free crown (8) can turn according to the micro motor (6) turning direction, the central portion of the reduction gear (7) including a pinion to transmit a circular turn to the three satellite gears (17) placed inside the reduction gear, which, with the collaboration of the fixed crown (15), make a slow turn of the free crown possible.

5. Electrical setting device for headlamp positioning according to one of the precedent claims,
**characterized in that**
the three satellite gears (17) included in the reduction gear (7) have two perimetral series of teeth with different diameter.

6. Electrical setting device for headlamp positioning according to one of the precedent claims,
**characterized in that**
the actuating stem (9) is composed of a cylinder shape body with multiple ribs having a rack (10) in its upper end with the rack teeth displaced from the stem axis, while the stem lower end is provided with a spherical terminal or a ball joint.

7. Electrical setting device for headlamp positioning according to one of the precedent claims,
**characterized in that**
the rack (10) associated to the stem (9) has a rim with twin legs located in the back face of the upper end, with the potentiometer (5) lever held between said legs.

8. Electrical setting device for headlamp positioning according to one of the precedent claims,
**characterized in that**
the speed reduction planet gear (7) includes an output shaft (24) with a worm screw which is an integral part thereof.

9. Electrical setting device for headlamp positioning according to one of the precedent claims,
**characterized in that**
the actuating lever (25) is made of a hollow cylinder in its main portion having inside a worm screw, having a solid end portion with cylinder shape of smaller diameter ending in a pointed shape, whereas the opposite end has a square shape ending in rim with legs, with the lever (29) of the potentiometer (30) being held between the legs.

10. Electrical setting device for headlamp positioning according to one of the precedent claims,
**characterized in that**
the cylinder shape body (22) has a main portion with a diameter larger than that of an end portion which has a neck guiding the actuating stem (25) around the stem outer diameter.

## Patentansprüche

1. Elektrische Einstellvorrichtung zum Positionieren von Scheinwerfern von der Art, die zum Einstellen der vertikalen Position von Fahrzeugscheinwerfern vom Fahrersitz aus verwendet wird, wobei diese einen elektrischen Mikromotor (6), ein Untersetzungsgetriebe (7), einen Parabolscheinwerfer Betätigungsstab (9; 25), und ein Potentiometer (5; 30) aufweist, wobei die Ausgangswelle des Mikromotors (6) mit einem Untersetzungsgetriebe (7) verbunden ist, welches über eine Zahnstange (10) und ein Ritzelsystem oder durch ein Schneckengetriebe den Betätigungsstab (9; 25) verschiebt, so dass die Motordrehbewegung in eine lineare Verschiebung des Betätigungsstabs (9; 25) umgewandelt wird,
**dadurch gekennzeichnet, dass**
die elektrische Einstellvorrichtung ein Planetengetriebe (7) als Untersetzungsgetriebe aufweist, wobei die Eingangswelle auf der gleichen Achse wie die Ausgangswelle liegt, und wobei ein elektronischer Schaltkreis (3; 23) zur Bewegungsregelung zusammen mit den anderen Komponenten im gleichen Gehäuse (1; 25) angeordnet ist, und wobei der elektronische Schaltkreis (3; 23) zur Bewegungsregelung ein Potentiometer (5; 30) zum zur Verfügung stellen einer Rückkopplungsspannung, die proportional zu der Scheinwerferposition ist, aufweist.

2. Elektrische Einstellvorrichtung zum Positionieren von Scheinwerfern gemäss Patentanspruch 1,
**dadurch gekennzeichnet, dass**
die elektrische Vorrichtung ein Gehäuse (22) mit zylindrischer Außenkontur aufweist, die die Komponenten, wie den Motor (6), das Getriebe (7) und den elektronischen Schaltkreis (23) aufnimmt.

3. Elektrische Einstellvorrichtung zum Positionieren von Scheinwerfern gemäss einem der voranstehenden Patentansprüche,
**dadurch gekennzeichnet, dass**
das Regelsystem des elektrischen Schaltkreises (3) eine quadratische Form mit quadratischen Nuten an einem Ende aufweist, die eine Anordnung mit zwei Beinen (12; 13) bilden, welche es ermöglicht, das Potentiometer (5) in irgendeinem der Beine anzuordnen, wobei alle elektronischen Komponenten auf der Oberseite des elektronischen Schaltkreises aufgelötet sind.

4. Elektrische Einstellvorrichtung zum Positionieren von Scheinwerfern gemäss einem der voranstehenden Patentansprüche,
**dadurch gekennzeichnet, dass**
das Planetenuntersetzungsgetriebe einen festen Zahnkranz (15) aufweist, der an dem Vorrichtungsgehäuse befestigt ist, der mit einem freien Zahnkranz (8) in Verbindung steht, so dass sich der freie Zahnkranz (8) gemäss der Drehrichtung des Mikromotors (6) drehen kann, wobei der zentrale Abschnitt des Untersetzungsgetriebes (7) ein Ritzel zum Übertragen einer kreisförmigen Umdrehung auf die drei Satelitenzahnräder (17) einschließt, die innerhalb des Untersetzungsgetriebes angeordnet sind, welches in Zusammenarbeit mit dem feststehenden Zahnkranz (15), eine langsame Umdrehung um den freien Zahnkranz ermöglicht.

5. Elektrische Einstellvorrichtung zum Positionieren von Scheinwerfern gemäss einem der voranstehenden Patentansprüche,
**dadurch gekennzeichnet, dass**
die drei Satelitenzahnräder (17), die in dem Untersetzungsgetriebe (7) enthalten sind, zwei Umfangsserien von Zähnen mit unterschiedlichem Durchmesser aufweisen.

6. Elektrische Einstellvorrichtung zum Positionieren von Scheinwerfern gemäss einem der voranstehenden Patentansprüche,
**dadurch gekennzeichnet, dass**
der Betätigungsstab (9) aus einem zylinderförmigen Körper mit mehreren Rippen zusammengesetzt ist, der eine Zahnstange (10) an seinem oberen Ende aufweist, wobei die Zahnstangenzähne von der Stabachse versetzt sind, während das untere Stabende mit einem sphärischen Anschluss oder Kugelgelenk vorgesehen ist.

7. Elektrische Einstellvorrichtung zum Positionierung von Scheinwerfern gemäss einem der voranstehenden Patentansprüche,
**dadurch gekennzeichnet, dass**
die Zahnstange (10), die mit dem Stab (9) im Zusammenhang steht, einen umgebogenen Rand mit zwei Beinen aufweist, der an der Rückseite des oberen Endes angeordnet ist, wobei der Hebel des Potentiometers (5) zwischen diesen Beinen gehalten ist.

8. Elektrische Einstellvorrichtung zum Positionieren von Scheinwerfern gemäss einem der voranstehenden Patentansprüche,
**dadurch gekennzeichnet, dass**
das Untersetzungsplanetengetriebe (7) eine Ausgangswelle (24) mit einer Schneckenschraube aufweist, die ein integraler Bestandteil derselben ist.

9. Elektrische Einstellvorrichtung zum Positionieren von Scheinwerfern gemäss einem der voranstehenden Patentansprüche,
**dadurch gekennzeichnet, dass**
der Betätigungshebel (25) aus einem Hohlzylinder hergestellt ist, der in seinem Hauptabschnitt innen eine Schneckenschraube aufweist, die einen festen zylinderförmigen Abschnitt mit geringeren Durchmesser aufweist, der in einer zugespitzten Form endet, wo gegen das entgegengesetzte Ende in einer viereckigen Form in einem Rand mit Beinen endet, wobei der Hebel (29) des Potentiometers (30) zwischen den Beinen gehalten wird.

10. Elektrische Einstellvorrichtung zum Positionieren von Scheinwerfern gemäss einem der voranstehenden Patentansprüche,
**dadurch gekennzeichnet, dass**
der zylinderförmige Körper (22) einen Hauptabschnitt mit einem Durchmesser größer als demjenigen eines Endabschnitts aufweist, der einen Hals aufweist, der den Betätigungsstab (25) um den äußeren Stabdurchmesser führt.

## Revendications

1. Appareil électrique de réglage du positionnement des phares du type de ceux utilisés pour ajuster la verticalité des phares à partir de la place du conducteur, comprenant un micro moteur électrique (6), un réducteur de vitesse (7), une tige faisant agir une parabole de phare (9 ; 25) et un potentiomètre (5 ; 30), où l'arbre de sortie du micro moteur (6) est associé à un réducteur de vitesse (7) lequel, par le biais d'un râtelier (10) et d'un système de pignons ou par le biais d'une vis sans fin, déplace la tige précitée (9 ; 25) de façon que le mouvement de rotation du moteur se transforme en un déplacement linéaire de la tige précitée (9 ; 25),
**caractérisé en ce que**
l'appareil électrique de réglage comprend un engrenage planétaire (7) en guise de réducteur de vitesse, ayant un arbre de rentrée sur le même axe que l'arbre de sortie, où une carte électronique de contrôle du mouvement (2 ; 23) se trouve dans le même râtelier (1 ; 25) que les autres composants et où la carte électronique de contrôle du mouvement (2 ; 23) comprend un potentiomètre (5 ; 30) pour fournir tension de rétroaction proportionnelle à la position des phares.

2. Un appareil électrique de réglage du positionnement des phares selon la revendication 1,
**caractérisé en ce que**
l'appareil électrique comprend un revêtement extérieur cylindrique (22) contenant les composants tels que le moteur (6), le mécanisme (7) et la carte électronique (23).

3. Un appareil électrique de réglage du positionnement des phares selon l'une des revendications précédentes,
**caractérisé en ce que**
le système de contrôle par carte électronique (23) est de forme carrée avec une encoche carrée à une extrémité formant un ensemble sur deux pieds (12, 13) qui rend possible de placer le potentiomètre (5) dans l'un ou l'autre pied, tous les éléments électroniques étant soudés sur la partie supérieure de la carte.

4. Un appareil électrique de réglage du positionnement des phares selon l'une des revendications précédentes,
**caractérisé en ce que**
l'engrenage planétaire comprend une couronne fixe (15) attachée au râtelier, associée à une couronne libre (8), de façon que la couronne libre (8) puisse tourner en fonction de la direction dans laquelle tourne le micro moteur (6) et en fonction de la partie centrale du réducteur (7) comprenant un pignon pour transmettre un mouvement circulaire aux trois mécanismes satellites (17) placés dans le réducteur, lequel, grâce à l'aide de la couronne fixe (15), permet à la couronne libre de tourner lentement.

5. Un appareil électrique de réglage du positionnement des phares selon l'une des revendications précédentes,
**caractérisé en ce que**
les trois mécanismes satellites (17) inclus dans le réducteur (7) ont deux séries de dents de différents diamètres sur leur périmètre.

6. Un appareil électrique de réglage du positionnement des phares selon l'une des revendications précédentes,
**caractérisé en ce que**
la branche (9) est composée d'un élément cylindrique avec de nombreuses stries et d'un râtelier (10) sur son extrémité supérieure, les dents se déplaçant sur l'axe de la branche alors que la partie inférieure de la branche comprend une borne sphérique ou un joint à rotule.

7. Un appareil électrique de réglage du positionnement des phares selon l'une des revendications précédentes,
**caractérisé en ce que**
le râtelier (10) associé à la branche (9) a un bord avec deux pieds situé à l'arrière de la partie supérieure, le levier du potentiomètre (5) étant placé entre les pieds précités.

8. Un appareil électrique de réglage du positionnement des phares selon l'une des revendications précédentes,
**caractérisé en ce que**
le réducteur de vitesse sous forme d'un engrenage planétaire (7) comprend un système de sortie (24) avec une vis sans fin qui en fait partie intégrante.

9. Un appareil électrique de réglage du positionnement des phares selon l'une des revendications précédentes,
**caractérisé en ce que**
le levier (25) comprend un cylindre creux dans sa partie principale, avec une vis sans fin, et se termine par une forme cylindrique de diamètre inférieur finissant en pointe, alors que l'autre extrémité est carrée se terminant en stries avec des pieds, le levier (29) du potentiomètre étant entre les pieds.

10. Un appareil électrique de réglage du positionnement des phares selon l'une des revendications précédentes,
**caractérisé en ce que**
la partie cylindrique (22) a un diamètre plus important sur une majeure partie que le diamètre de l'extrémité comprenant un collet pour guider la branche (25) dont le diamètre équivaut au diamètre extérieur de la branche.
